## Europäisches Patentamt

## European Patent Office

## Office européen des brevets

(19)

(11) Veröffentlichungsnummer: **0 068 212**
**B1**

(12)

# EUROPÄISCHE PATENTSCHRIFT

(45) Veröffentlichungstag der Patentschrift:
27.03.85

(51) Int. Cl.⁴: **G 03 B 42/02**

(21) Anmeldenummer: 82105073.9

(22) Anmeldetag: 09.06.82

(54) Kassettenhalter für ein Röntgenuntersuchungsgerät.

(30) Priorität: 25.06.81 DE 3125015

(43) Veröffentlichungstag der Anmeldung:
05.01.83 Patentblatt 83/1

(45) Bekanntmachung des Hinweises auf die Patenterteilung:
27.03.85 Patentblatt 85/13

(84) Benannte Vertragsstaaten:
**BE DE FR IT**

(56) Entgegenhaltungen:
**CH - A - 458 051**
**DE - B - 1 040 362**
**DE - B - 1 145 009**
**DE - B - 1 302 110**
**DE - B - 2 333 157**
**US - A - 3 771 781**
**US - A - 3 968 375**
**US - A - 3 976 887**

(73) Patentinhaber: **Siemens Aktiengesellschaft, Berlin und München Wittelsbacherplatz 2, D-8000 München 2 (DE)**

(72) Erfinder: **Hahn, Alfred, Bunsenstrasse 64, D-8520 Erlangen (DE)**
Erfinder: **Bögl, Manfred, Österreicherstrasse 28, D-8520 Erlangen (DE)**
Erfinder: **Rauch, Werner, Saarlautererstrasse 45, D-8500 Nürnberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Kassettenhalter für ein Röntgenuntersuchungsgerät mit mindestens einem Paar gegenläufig verstellbarer Spannbacken für die zentrische Einspannung von Röntgenfilmkassetten unterschiedlichen Formats und mit mindestens einer die Spannbacken aufeinander zu ziehenden Feder.

Bei Röntgenuntersuchungsgeräten ist es allgemein bekannt, Röntgenfilmkassetten unterschiedlichen Formats zentrisch in ein meist unter dem Untersuchungstisch einschiebbares Kassettenblech einzuspannen. Hierzu offenbart die amerikanische Patentschrift 3 771 781, wie zwei Spannbacken über zwei Paare gegenläufig verstellbarer Zahnstangen verstellt werden können. Bei dieser Konstruktion ist der Aufwand von vier Zahnstangen und zwei Ritzeln für die gegenläufige Verstellung von einem Paar Spannbacken erheblich. Auch eignet sich eine solche Spannvorrichtung infolge ihrer großen Abmessungen nicht sehr gut zur Halterung von Kassetten, die, z. B. bei Unfallpatienten unmittelbar am Körper, insbesondere auch in Körpernischen des Patienten zur Anlage gebracht werden sollen.

Der Erfindung liegt die Aufgabe zugrunde einen Kassettenhalter zu konstruieren, der auf drei Seiten kleiner gehalten werden kann als die kleinste zu spannende Kassette. Er soll bequem in seiner Handhabung und zuverlässig und zugleich preiswert in seiner Konstruktion sein.

Die Aufgabe wird erfindungsgemäß durch die im Kennzeichen des Patentanspruches 1 angegebenen Merkmale gelöst. Diese Art der Kassettenspannung läßt sich sehr raumsparend aufbauen und braucht daher die gespannte Kassette an den Seiten nicht zu überragen, was der Anlage derselben am Körper des Patienten zugute kommt. Durch die Verwendung eines Stellgriffes läßt sich die gerade eingespannte Röntgenfilmkassette in einfachster Weise entspannen und herausnehmen und durch eine andere mit einem neuen Filmblatt versehene Röntgenfilmkassette ersetzen. Darüber hinaus ist die Verwendung eines im Gehäuse schwenkbar gelagerten zweiarmigen Hebels als Stellelement relativ einfach, preiswert und zuverlässig.

Weitere Einzelheiten der Erfindung werden anhand eines in den Figuren dargestellten Ausführungsbeispieles erläutert. Es zeigt

Fig. 1 ein Röntgenuntersuchungsgerät mit einem an einer Stativsäule befestigten Kassettenhalter, und

Fig. 2 eine Draufsicht auf den Kassettenhalter bei geöffnetem Gehäuse.

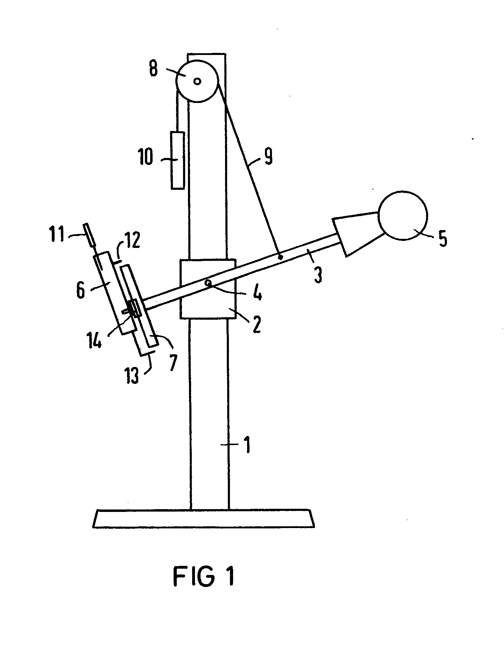

Die Fig. 1 zeigt eine Stativsäule 1, an der ein Längslaufwagen 2 höhenverstellbar gelagert ist. An dem Längslaufwagen ist ein Träger um eine horizontale Achse 4 schwenkbar gelagert. An dem einen Ende dieses Trägers 3 ist eine Röntgenröhre 5 und an dem dazu gegenüberliegenden Ende ein Halter 6 für eine Röntgenfilmkassette 7 befestigt. Das Gewicht des Längslaufwagens 2, des Trägers 3, der Röntgenröhre 5 und des Kassettenhalters 6 sind durch ein an einem über eine Seilrolle 8 geführten Seilzug 9 aufgehängten Gegengewicht 10 ausgeglichen. An dem Kassettenhalter 6 erkennt man einen Stellgriff 11 und eine zwischen Spannbacken 12, 13, 14 eingespannte Röntgenfilmkassette.

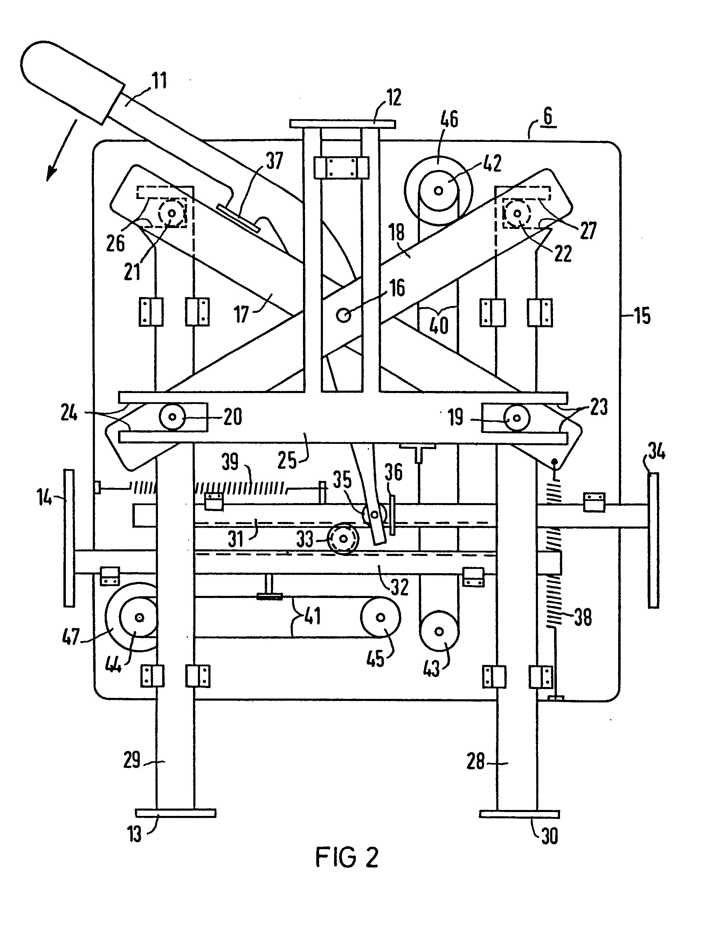

Die Fig. 2 zeigt den Kassettenhalter 6 in Aufsicht. Das vordere Abdeckblech ist zur Darstellung des inneren Aufbaues abgenommen. Der seitlich aus dem Gehäuse 15 vorstehende Stellgriff 11 ist um eine senkrecht zur Kassettenebene ausgerichtete zentrale Achse 16 schwenkbar. Um dieselbe Achse 16 sind auch noch zwei zweiarmige Hebel 17, 18 drehbar gelagert. Letztere tragen an ihren freien Enden je ein Kugellager 19, 20, 21, 22. Die in der Darstellung der Fig. 2 unteren Kugellager 19, 20 der beiden zweiarmigen Hebel 17, 18 laufen in gabelförmigen Ausnehmungen 23, 24 eines im Gehäuse 15 höhenverstellbaren Schlittens 25. Dieser ist unmittelbar mit der in der Fig. 2 oberen Spannbacke 12 verbunden. Die in der Darstellung der Fig. 2 oberen Kugellager 21, 22 der beiden zweiarmigen Hebel 17, 18 laufen in gabelförmigen Ausnehmungen 26, 27 zweier gegenläufig zum Schlitten 25 verschiebbaren Schieber 28, 29. Diese tragen an ihren jeweiligen Enden je eine über die Abdeckung des Kassettenhalters vorstehende Spannbacke 13, 30.

Im Gehäuse 15 des Kassettenhalters 6 sind außen außerdem zwei Zahnstangen 31, 32 quer zur Stellrichtung des Schlittens 25 verschiebbar gelagert. Sie kämmen mit einem zwischen ihnen im Gehäuse 15 des Kassettenhalters 6 drehbar gelagerten Ritzel 33. Jede der beiden Zahnstangen 31, 32 trägt an ihrem jeweiligen Ende je eine Spannbacke 14, 34. Der Stellgriff 11 ist als zweiarmiger Hebel ausgebildet. An seinem der Griffseite gegenüberliegenden Ende trägt er ein Kugellager 35, das gegen einen Anschlag 36 der einen der beiden Zahnstangen 31 anliegt. Am griffseitigen Schenkel des Stellgriffs 11 ist ein weiterer Anschlag 37 zu erkennen, der mit einem der beiden zweiarmigen Hebel 17 bei der Verstellung des Stellgriffs in Pfeilrichtung in Eingriff gelangt. Sowohl der mit dem Stellgriff 11 in Eingriff bringbare zweiarmige Hebel 17 als auch die eine der beiden Zahnstangen 31 werden von je einer Zugfeder 38, 39 in eine Extremposition gezogen, bei der die zugehörigen Spannbacken den geringsten gegenseitigen Abstand haben. Der Schlitten 25 und die eine Zahnstange 32 sind jeweils mit einem Trumm eines endlosen Zahnriemens 40, 41 verbunden. Beide Zahnriemen sind über je zwei Umlenkrollen 42, 43, 44, 45 geführt, von denen jeweils die eine Umlenkrolle 42, 44 mit einem Istwertgeber 46, 47, beispielsweise ein Potentiometer, verbunden ist.

Zum Einsetzen einer Röntgenfilmkassette 7 beliebigen Formats genügt es, den Stellgriff 11 in Pfeilrichtung herumzuschwenken. Dabei dreht der Stellgriff mit seinem Anschlag 37 den einen zweiarmigen Hebel 17 entgegen dem Uhrzeigersinn um die gemeinsame Achse 16. Dabei verschiebt der zweiarmige Hebel 17 mit seinem in der Fig. 2 rechten unteren Kugellager 19 den Schlitten 25 und mit ihm die obere Spannbacke 12 nach oben. Der Schlitten 25 nimmt dabei auch das Kugellager 20 des anderen zweiarmigen Hebels 18 mit, so daß die gegenüberliegenden, in der Fig. 2 oberen Kugellager 21, 22 der beiden zweiarmigen Hebel 17, 18 die beiden Schieber 28, 29 für die unteren Spannbacken 13, 30 in entgegengesetzter Richtung, d. h. in der Darstellung der Fig. 2 nach unten mitnehmen. Zugleich drückt das dem Griff gegenüberliegende Ende des Stellgriffes 11 mit dem dort gelagerten Kugellager 35 den an der oberen Zahnstange 35 befestigten Anschlag 36 und damit diese Zahnstange an der die in der Fig. 2 rechte Spannbacke 34 befestigt ist, nach rechts außen. Diese nimmt über das Ritzel 33 auch die gegenüberliegende Zahnstange 32 mit der linken Spannbacke 14 in entgegengesetzter Richtung mit. Dies hat zur Folge, daß alle Spannbacken 12, 13, 14, 30, 34 durch das Niederdrücken des Stellgriffes 11 in Pfeilrichtung entgegen der Kraft der beiden Zugfedern 38, 39 voneinander entfernt werden. Eine eventuell zwischen ihnen eingespannte Röntgenfilmkassette wird so freigegeben. Zugleich kann eine neue Röntgenfilmkassette zwischen die Spannbacken eingelegt werden. Sobald dies geschehen ist, können die Zugfedern 38, 39 beim Zurückschwenken des Stellgriffs 11 entgegen der Pfeilrichtung oder beim Loslassen desselben, die beiden Spannbackenpaare wieder aufeinander zuziehen. Dabei wird auch der Stellgriff 11 durch den Anschlag 37 und/oder 36 in seine Ausgangsstellung zurückgedrückt. Die beiden Zugfedern 38, 39 halten dann die eingespannte Röntgenfilmkassette 7 auf dem Kassettenhalter 6 fest.

Infolge der zwangsweisen gegenläufigen Verstellung der jeweils einander gegenüberliegenden Spannbacken wird eine exakt zentrische Spannung von Röntgenfilmkassetten beliebigen Formats erreicht. Die Stellung der von den Zahnriemen mitgenommenen Istwertgeber 46, 47 entspricht der Breite und Höhe der jeweils eingespannten Röntgenfilmkassette. Ihre elektrischen Werte lassen sich beispielsweise zur Steuerung einer Tiefenblende verwenden.

**Patentansprüche**

1. Kassettenhalter für ein Röntgenuntersuchungsgerät mit mindestens einem Paar gegenläufig verstellbarer Spannbacken für die zentrische Einspannung von Röntgenfilmkassetten unterschiedlichen Formates und mit mindestens einer die Spannbacken aufeinander zuziehenden Feder, gekennzeichnet durch einen am Gehäuse (15) des Kassettenhalters (6) bewegbar gelagerten, von Hand zu betätigenden Stellgriff (11), durch mindestens einen am Gehäuse (15) schwenkbar gelagerten zweiarmigen Hebel (17; 18), dessen eines Ende in einen im Gehäuse (15) geführten, eine Spannbacke (13, 30) tragenden Schieber (29; 28) eingreift, während sein anderes Ende einen im Gehäuse geführten Schlitten (25) betätigt, der eine der erstgenannten gegenüberliegende Spannbacke (12) trägt, wobei durch Betätigung des Stellgriffes (11) der zweiarmige Hebel (17, 18) verschwenkt wird und dadurch der Schieber (29; 28) und der Schlitten (25) entgegen der Federkraft so verschoben werden, daß die genannten Spannbacken (12; 13; 30) auseinanderbewegt werden.

2. Kassettenhalter nach Anspruch 1, dadurch gekennzeichnet, daß zwei sich überkreuzende zweiarmige Hebel (17, 18) im Gehäuse (15) gegenläufig schwenkbar gelagert sind, die mit ihrem jeweils einen Ende mit jeweils einem Ende des Schlittens (25) und mit ihrem jeweils anderen Ende mit je einem gegenläufig zum Schlitten (25) verstellbaren Schieber (29; 28) gekuppelt sind.

3. Kassettenhalter nach Anspruch 2, dadurch gekennzeichnet, daß der Schlitten (25) an seinen Enden jeweils eine gabelförmige Ausnehmung (23, 24) trägt, in welchem ein am jeweiligen Hebelende gelagertes Kugellager (19, 20) läuft.

4. Kassettenhalter nach Anspruch 2, dadurch gekennzeichnet, daß der eine der beiden sich kreuzenden zweiarmigen Hebel (17) vom Stellgriff (11) in Entspannrichtung mitgenommen wird.

5. Kassettenhalter nach Anspruch 1 oder 4, dadurch gekennzeichnet, daß ein weiteres, rechtwinklig zu dem erstgenannten Spannbackenpaar (12, 13, 30) verstellbares weiteres Spannbackenpaar (14, 34) von dem Stellgriff (11) in Entspannrichtung verstellbar ist.

6. Kassettenhalter nach Anspruch 5, dadurch gekennzeichnet, daß die beiden Spannbacken (14, 34) des zweiten Spannbackenpaares an je einer Zahnstange (31, 32) befestigt sind, die über ein mit ihnen kämmendes, im Gehäuse (15) drehbar gelagertes Ritzel (33) gegenläufig verstellbar sind.

7. Kassettenhalter nach einem der vorhergehenden Ansprüche, dadurch gekennzeichnet, daß jedes Spannbackenpaar (12, 13, 14, 30, 34) über einen Seilzug (40, 41) mit einem mechanisch-elektrischen Wandler (46, 47) zur Steuerung einer Primärstrahlenblende verbunden ist.

**Claims**

1. A cassette holder for an X-ray examination apparatus having at least one pair of oppositely running adjustable clamping jaws for the central clamping of X-ray film cassettes of different format and having at least one spring which pulls the clamping jaws towards one another, characterised by a manually operable adjusting handle (11) which is movably mounted on the housing (15) of the cassette holder (6), and by at least one two-armed lever (17; 18) which is pivotably mounted on the housing (15) and one end of which engages in a slide (29; 28) which is guided in the housing (15) and supports a clamping jaw (13, 30), whilst its other end operates a carriage (25) which is guided in the housing and carries a clamping jaw (12) which is located opposite the first-mentioned clamping jaw, where on operating the adjusting handle (11), the two-armed lever (17, 18) is pivoted and the slide (29; 28) and the carriage (25) are thereby displaced against the spring force in such a way that the said clamping jaws (12; 13, 30) are moved apart.

2. A cassette holder according to claim 1, characterised in that two two-armed levers (17, 18) crossing one another, are mounted in the housing (15) so as to be pivotable in opposite directions, which levers have in each case one end coupled to a respective end of the carriage (25) and in each case, the other end to a respective slide (29, 28) which is adjustable in the opposite direction to the carriage (25).

3. A cassette holder according to claim 2, characterised in that, at its ends, the carriage (25) carries a respective fork-shaped recess (23, 24), in which a ball bearing (19, 20) runs which is supported at the end of the respective lever.

4. A cassette holder according to claim 2, characterised in that the one of the two crossing two-armed levers (17) is moved along in the release direction by the adjusting handle (11).

5. A cassette holder according to claim 1 or 4, characterised in that a further pair of clamping jaws (14, 34), which are adjustable at right angles to the previously mentioned pair of clamping jaws (12, 13, 30), is adjustable by means of the adjusting handle (11) in the release direction.

6. A cassette holder according to claim 5, characterised in that the two clamping jaws (14, 34) of the second pair of clamping jaws are secured in each case to a respective toothed rack (31, 32), which are adjustable in opposite directions by means of a pinion (33) which meshes with the toothed racks and is rotatably mounted in the housing (15).

7. A cassette holder according to one of the preceding claims, characterised in that each pair of clamping jaws (12, 13, 14, 30, 34) is connected by a cable line (40, 41) to a mechanical-electrical transducer (46, 47) for controlling a primary radiation diaphragm.

## Revendications

1. Porte-cassette pour un appareil de radiodiagnostic comportant au moins un couple de mâchoires de serrage, déplaçables l'une par rapport à l'autre et servant à serrer en position centrée des cassettes pour film radiographique possédant des formats differents et comportant au moins un ressort rapprochant les mâchoires de serrage l'une vers l'autre, caractérisé par une manette de réglage (11) devant être actionnée manuellement, montée de façon à pouvoir être déplacée sur le boîtier (15) du porte-cassette (6), et par au moins un levier à deux bras (17; 18) monté de façon à pouvoir pivoter sur le boîtier (15) et dont une extrémité est accrochée à un coulisseau (29; 28) guidé dans le boîtier (15) et portant une mâchoire de serrage (13; 30), tandis que son autre extrémité actionne un chariot (25) guidé dans le boîtier et qui porte une mâchoire de serrage (12) disposée de la mâchoire de serrage indiquée en premier lieu, l'actionnement de la manette de réglage (11) provoquant le basculement du levier à deux bras (17, 18) et provoquant de ce fait le déplacement du coulisseau (29; 28) et du chariot (25) à l'encontre de la force du ressort de telle sorte que les mâchoires de serrage (12; 13, 30) indiquées s'écartent l'une de l'autre.

2. Porte-cassette suivant la revendication 1, caractérisé par le fait que deux leviers à deux bras (17, 18) se croisant, qui sont accouplés par une de leurs extrémités à une extrémité respective du chariot (25) et par leur autre extrémité à un coulisseau respectif (29; 28) déplaçable en sens inverse du chariot (25), sont montés dans le boîtier (15) de manière à pouvoir pivoter en des sens opposés.

3. Porte-cassette suivant la revendication 2, caractérisé par le fait que le chariot (25) comporte sur ses extrémités, des évidements respectifs en forme de fourches (23, 24), dans lesquels coulissent des paliers sphériques (19, 20) montés dans les extrémités respectives des leviers.

4. Porte-cassette suivant la revendication 2, caractérisé par le fait que l'un (17) des deux leviers à deux bras s'intersectant est entraîné par la manette de réglage (11) suivant la direction de desserrage.

5. Porte-cassette suivant la revendication 1 ou 4, caractérisé par le fait qu'un autre couple de mâchoires de serrage (14, 34), déplaçable perpendiculairement par rapport au premier couple indiqué de mâchoires de serrage (12, 13, 30) est déplaçable à l'aide de la manette de réglage (11) suivant la direction de desserrage.

6. Porte-cassette suivant la revendication 5, caractérisé par le fait que les deux mâchoires de serrage (14, 34) du second couple de mâchoires de serrage sont fixées sur des crémaillères respectives (31, 32) qui peuvent être entraînées en des sens opposés par l'intermédiaire d'un pignon (33) engrènant avec ces crémaillères et monté rotatif dans le boîtier (15).

7. Porte-cassette suivant l'une des revendications précédentes, caractérisé par le fait que chaque couple de mâchoires de serrage (12, 13, 14, 30, 34) est relié par l'intermédiaire d'un câble de traction (40, 41) à un transducteur mécanique/électrique (46, 47) pour la commande d'un diaphragme du rayonnement primaire.

FIG 1

FIG 2